# EUROPEAN PATENT APPLICATION

(11) **EP 2 209 299 A1**
(43) Date of publication of application: **21.07.2010**
(21) Application number: 08800547.5
(22) Date of filing: 29.08.2008
(51) Int. Cl.: H04N 5/14, H04L 29/06

(54) **A METHOD AND SYSTEM FOR USING IP NETWORK TO CONNECT A TELEVISION AND A COMPUTER TO PROCESS INTERACTIVE ENTERTAINMENT**

(30) Priority: 12.09.2007 CN 200710153907
(71) Applicant: Shengle Information Technology (Shanghai) Co., Ltd, Shanghai 201203 (CN)
(72) Inventor: ZHANG, Weiming, Shanghai 201203 (CN)
(74) Representative: Brown, David Leslie
(86) International application number: PCT/CN2008/001549
(87) International publication number: WO 2009/033359

(57) **Abstract**

A system and a method for interactive entertainment with a television and a computer connected by the IP network are provided. The system includes a computer, a TV set and an IP network, and particularly a computer PC box and a television TV box. The display output interface and the communication interface of the computer are connected to the computer PC box. The computer PC box communicates with the television TV box via the IP network. The audio-video signal of the television TV box is outputted to the TV set. Other input/output devices on the TV side are connected into the system via a corresponding interface of the television TV box. The communication medium adopted for the IP network can be selected from the group consisting of a category 5 cable, a power line, wirelessness or a fiber. The present invention, establishing the IP network by making use of the existing domestic local area network, the indoor power line or the wireless communication, realizes two-way transmission of the audio-video signal and the control signal between a computer and a TV set inside a house, and greatly facilitates arrangement of the domestic on-line entertainment system with a computer as the center.

## Description

### FIELD OF THE INVENTION

The present invention relates to the Internet access technology, the television and computer application, and the domestic interactive entertainment technology, particularly to a PC box and a TV box communicating via the IP network and characteristic of path configuration, as well as a system and a method for interactive entertainment with a TV set and a computer connected by this pair of PC box and TV box.

### BACKGROUND OF THE INVENTION

With in-depth application of the Internet and popularization of the broadband network, various multimedia contents on the Internet covering every social aspect are increasingly abundant, and various multimedia communicating and interactive tools via the Internet also increasingly popular. The Internet is evolving from a tool initially for communication and information acquisition into an omnidirectional platform where people can work, study, communicate, play, etc.. People are increasingly dependent on the Internet for work and life, and the number of people in the world accessing the Internet, especially the broadband Internet, is still rapidly growing. Since domestic residence is the main location where people access the Internet outside an office, the number of users of domestic broadband access has been growing the most rapidly in recent years.

It has currently been popular for people to enjoy multimedia contents on the Internet at a short distance via a computer in a study at home, download various multimedia documents such as movies from the Internet, and save and watch digital photos and videos, etc.. A problem is that people cannot get more relaxed if enjoying these multimedia contents on a computer screen in a study, especially for a long time.

However, a better method has still been unavailable so far for people to enjoy multimedia contents on the network or a domestic computer in a more relaxed way at a farther distance via a TV set in a living room or a bedroom. The most popular way of doing this at present is to add an entertainment computer exclusively for TV on-line entertainment. This entertainment computer is in fact not different from the existing domestic computer in function, and many families cannot afford this repetitive investment. Besides, the installation and operation methods are also very complicated for sharing information and the Internet access between the two computers. Moreover, since various application softwares are upgraded frequently and viruses widely spread on the network, the maintenance workload of a computer is not small, adding one computer meaning adding the maintenance workload of one computer.

Another method is to apply to an IPTV (network TV) operator for the IPTV service, and realize the TV on-line entertainment via a special IP (network) set-top box. This method also has quite a few problems. First, the IPTV service has currently not been widely spread yet, and it cannot get popular in a short time, either; meanwhile, contents that the IPTV service can provide are completely controlled by the IPTV operator. Secondly, an IP set-top box cannot generally share the contents on a domestic computer, and the operation is also very complicated for sharing the contents on a computer. Certainly, the service charge of IPTV is also a problem, and it is an additional economical burden for many families to pay for the IPTV service in addition to the broadband Internet access.

It has been an unresolved problem how to enjoy the multimedia contents on the network or a domestic computer via a TV set in a more relaxed way with neither increasing the cost significantly nor increasing the operation complication and maintenance workload too much.

Moreover, it is still a main way to watch TV programs via the cable digital TV network or the analog TV network. However, users currently still cannot perform TV program recording and TV time shift in a more economical and viable way, and an effective means is also lacked for each cable TV program channel to establish a real-time interaction with the vast TV audience.

### CONTENTS OF THE INVENTION

A purpose of the present invention is to provide a simple method and system for the Internet access on TV and the interactive entertainment without the many shortcomings with the prior method. The present invention, making full use of the investment a user makes in a home computer, provides an inexpensive but powerful solution for a domestic user to access the Internet via a TV set, which simplifies operation complication of the Internet access on TV and makes a TV user enjoy multimedia contents on the network and a computer very easily and conveniently. The present invention better resolves a series of problems at the same time, such as the cable TV program recording, the time shift, and the effective real-time interaction between the cable TV program channel and the TV audience. The present invention designs a pair of PC (computer) box and TV (television) box for the Internet access on TV and the interactive entertainment by networking a computer and a TV set. This pair of boxes, communicating via the IP network, can quickly establish a system by making use of the existing wiring of the local area network inside a house or the local area network established with the power line or the wireless communication, thus greatly reducing the engineering load.

In order to resolve the above problems, the present invention adopts the following technical solution:

The present invention provides on the computer side a PC box, which includes a PC box body; the PC box body is provided inside with a computer PC box, which is integrated with a PC audio-video acquisition and compression communication circuit, a PC USB interface circuit, a PC display card interface, a PC IP network communication module circuit, and a PC USB (Universal Serial Bus) interface; the PC audio-video acquisition and compression communication circuit is connected at one end with the PC display card interface, and at the other end with the PC IP network communication module circuit; and the PC USB interface circuit is connected at one end with the PC USB interface, and at the other end with the PC IP network communication module circuit.

The computer PC box is further integrated inside with a VGA (a VGA interface is an interface on the display card for outputting an analog signal, i.e. Video Graphics Array) signal multiplex circuit and a VGA output interface, the VGA output interface being connected with the PC display card interface via the VGA signal multiplex circuit.

The computer PC box is further integrated inside with a PC audio input interface, which is connected with the PC audio-video acquisition and compression communication circuit.

The present invention further provides on the TV side a TV box, which includes a TV box body; the TV box body is provided inside with a television TV box, which is integrated with a TV digital audio-video communication decoding circuit, a TV USB interface module circuit, a USB Hub (concentrator) circuit, and a TV IP network communication module circuit; the TV digital audio-video communication decoding circuit is connected at one end with the TV video output interface, and at the other end with the TV IP network communication module circuit; and the TV USB interface module circuit is connected at one end with the USB Hub circuit in the system, and at the other end with the TV IP network communication module circuit.

The television TV box is further integrated with a TV audio output interface, which is connected with the TV digital audio-video communication decoding circuit.

It is preferred that the television TV box is further integrated with a USB device and a TV USB interface, the USB device being connected with the USB Hub circuit, the TV USB interface being connected with the USB Hub circuit.

The USB device is a USB sound card, which is connected with the USB Hub circuit and integrated with the TV audio output interface and the TV microphone interface.

The USB device can also be selected from the group consisting of a USB-PS2 keyboard/mouse interface converter, a USB infrared receiver, a USB radio-frequency receiver, and a USB audio-video acquisition and compression device, or the combination thereof.

The present invention further provides a system for interactive entertainment via a TV set and a computer connected by the IP network; the system includes a computer, a TV set and the IP communication network, as well as the above-mentioned computer PC box and television TV box, the display card interface A of the computer being connected with the PC display card interface of the computer PC box, the USB interface of the computer being connected with the PC USB interface; on one hand, the PC USB interface circuit receives a first USB signal that a computer sends to the USB device, and outputs the signal after data transformation via the PC IP network communication module circuit; and on the other hand, it receives and processes a second USB signal from the IP network and sends it to the computer via the PC IP network communication module circuit; the IP network communication module of the computer PC box is connected via the IP network with the IP network communication module of the television TV box, realizing the signal and data transmission between the computer module and the TV module; the TV video output interface of the television TV box is connected with the video input interface B of the TV set; the TV audio output interface is connected with the audio interface B of the TV set; on one hand, the TV USB interface module receives a second USB signal sent by the USB device and forwarded by the USB Hub circuit, and outputs the signal via the IP network communication module interface after being driven; and on the other hand, it receives the first USB signal from the communication line and forwards it to the USB Hub circuit via the IP network communication module interface.

The VGA output interface of the computer PC box is connected with the display.

A system as mentioned above can certainly be connected by a wire, such as a category 5 cable. However, a direct connection with the wire will increase the usage cost, requires a great engineering load for wiring, and sometimes also affects the indoor appearance.

The connection link of the IP network of the present invention can be selected from the group consisting of the network cable, the RF wirelessness or the power line.

The USB interface includes a USB1.0 interface, a USB1.1 interface, and a USB2.0 interface of the specification.

It is preferred that the computer further includes a second display card; the display card is connected with the PC display card interface, the second display card interface with the display; or the display card is connected with the display, and the second display card interface with the PC display card interface.

It is more preferred that the second display card and the computer PC box are integrated into a PCI comprehensive card, which is positioned in the computer and connected with the television TV box via a communication line.

The display card and the second display card can be either an integrated display card on the mainboard of the computer, or an independent display card inserted in a slot of PCI, AGP or PCI-Express on the computer mainboard.

It is preferred that this system further includes an external USB device, which is connected with the TV USB interface. The external USB device can be selected from the group consisting of a USB sound card, a USB-PS2 interface converter, a USB infrared receiver, a USB radio-frequency receiver, and a USB audio-video acquisition and compression device, or the combination thereof.

The TV microphone interface is used for connection with a microphone.

The audio output interface of the USB sound card includes a left-right binaural audio interface for connection with the TV set, and a 5.1 track fiber audio interface for connection with the domestic sound system.

The TV set includes a common TV set, a projector and a video display.

The present invention further provides a method for interactive entertainment via a TV set and a computer connected by the IP network; in the method, a USB system is established with the USB interface of the computer, the USB Hub circuit and the USB device in the television TV box, and the external USB device, and a video signal outputted by the display card interface A of the computer is finally transmitted to the TV set via the computer PC box and the television TV box.

The USB audio-video acquisition and compression device, after performing digitalized acquisition and compression on a TV audio-video signal sent from a TV audio-video signal source, finally transmits the signal to the computer via the television TV box and the computer PC box, the TV audio-video signal source including a digital TV set-top box and an analog TV tuner; and the USB infrared receiver is used for receiving an infrared signal emitted by a remote controller.

The operation mode of the system of the present invention includes a single-workstation mode and a double-workstation mode.

In the single-workstation mode, a computer user and a TV user, via their own keyboard, mouse or remote device, control together the same group of application softwares running under the operating system of the computer, getting the same displayed content and sound.

In the double-workstation mode, a computer user and a TV user, via their own keyboard, mouse or remote device, independently control a group of application softwares running under the operating system of the computer, respectively, each getting the independent displayed content and sound.

In addition, if there are many displays, their operation mode can also be a multi-workstation mode, where each of the displays and the TV set, via their own keyboard, mouse or remote device, independently control a group of application softwares running under the operating system of the computer, respectively, each getting the independent displayed content and sound.

### BRIEF DESCRIPTION OF THE DRAWINGS

Figure 1 is a schematic view of an embodiment of structure of the system of the present invention and the connection method thereof for interactive entertainment via a TV set and a computer connected by the IP network.
Figure 1-1 is a schematic view of an embodiment of structure of the system of the present invention and the connection method thereof for interactive entertainment via a TV set and a computer connected by the IP network, where the audio interface of the TV box is connected with a domestic sound system.
Figure 2 is a schematic view of the single-workstation mode of the system of the present invention for interactive entertainment via a TV set and a computer connected by the IP network.
Figure 3 is a schematic view of the comprehensive application of on-line entertainment and cable digital TV of the system of the present invention for interactive entertainment via a TV set and a computer connected by the IP network.
Figure 4 is a schematic view of the TV program interactive application of the system of the present invention for interactive entertainment via a TV set and a computer connected by the IP network.
Figure 5 is a schematic view of the double-workstation mode of the system of the present invention for interactive entertainment via a TV set and a computer connected by the IP network.
Figure 6 is a schematic view of an improved double-workstation mode of the system of the present invention for interactive entertainment via a TV set and a computer connected by the IP network.
Figure 7 is a block schematic diagram of interior of the PCI comprehensive card in the system of the present invention for interactive entertainment via a TV set and a computer connected by the IP network.
Figure 8 is an electricity schematic diagram of an embodiment of the video acquisition and compression circuit of the computer PC box in the system of the present invention for interactive entertainment via a TV set and a computer connected by the IP network.
Figure 9-1 is an electricity schematic diagram of the PC USB interface module in the system of the present invention for interactive entertainment via a TV set and a computer connected by the IP network.
Figure 9-2 is an electricity schematic diagram of one of the embodiments of the TV USB interface module in the system of the present invention for interactive entertainment via a TV set and a computer connected by the IP network.
Figure 10 is an electricity schematic diagram of an embodiment of the communication module in the system of the present invention for interactive entertainment via a TV set and a computer connected by the IP network, where the IP communication network is the power line.
Figure 11 is an electricity schematic diagram of an embodiment of the USB interface module in the television TV box in the system of the present invention for interactive entertainment via a TV set and a computer connected by the IP network.
Figure 12-1 is a communication schematic diagram of the system of the present invention for interactive entertainment via a TV set and a computer connected by the IP network, where the IP network is the wired local area network.
Figure 12-2 is a communication schematic diagram of the system of the present invention for interactive entertainment via a TV set and a computer connected by the IP network, where the IP network is the power-line carrier local area network.
Figure 13 is a schematic view of the system of the present invention for interactive entertainment via a TV set and a computer connected by the IP network, where the IP network is the wireless communication.
Figure 14 is a schematic view of the system of the present invention for interactive entertainment via a TV set and a computer connected by the IP network, where the IP network is the wireless/power-line carrier communication.
Figure 15 is a schematic view of an embodiment of the system of the present invention for interactive entertainment via a TV set and a computer connected by the IP network, where a cable digital TV signal is sent to the computer via the television TV box.
Figure 16 is a block structural diagram of Embodiment 1 of the computer PC box in the system of the present invention for interactive entertainment via a TV set and a computer connected by the IP network.
Figure 17 is a structural diagram of an embodiment of the power line interface of the PC IP network communication module in the system of the present invention for interactive entertainment via a TV set and a computer connected by the IP network.
Figure 18 is a structure block diagram of an embodiment of the wireless interface of the PC IP network communication module in the system of the present invention for interactive entertainment via a TV set and a computer connected by the IP network.
Figure 19 is a structure block diagram of Embodiment 1 of the television TV box in the system of the present invention for interactive entertainment via a TV set and a computer connected by the IP network.
Figure 20 is a structure block diagram of Embodiment 1 of the TV control interface module in the system of the present invention for interactive entertainment via a TV set and a computer connected by the IP network.
Figure 21 is a structure block diagram of Embodiment 2 of the television TV box in the system of the present invention for interactive entertainment via a TV set and a computer connected by the IP network.
Figure 22-1 is a block diagram of the single-workstation mode of the system of the present invention for interactive entertainment via a TV set and a computer connected by the IP network, where the PC sound card output is connected to the computer PC box.
Figure 22-2 is a block diagram of the single-workstation mode of the system of the present invention for interactive entertainment via a TV set and a computer connected by the IP network, where the cooperation between a computer user and a TV user is needed.
Figure 22-3 is a structure block diagram of the double-workstation mode of the system of the present invention for interactive entertainment via a TV set and a computer connected by the IP network, where a computer user and a TV user can operate independently.
Figure 22-4 is a structure block diagram of the single-workstation mode of the system of the present invention for interactive entertainment via a TV set and a computer connected by the IP network, where a plural of TV boxes can be connected, whereas each TV user can only operate alone.
Figure 22-5 is a structure block diagram of the multi-workstation mode of the system of the present invention for interactive entertainment via a TV set and a computer connected by the IP network, where a plural of TV boxes can be connected, and TV users can operate simultaneously.

### RETAILED DESCRIPTION OF THE EMBODIMENTS

The system, the method, the PC box, and the TV box of the present invention will be described further in detail below with reference to drawings and embodiments.

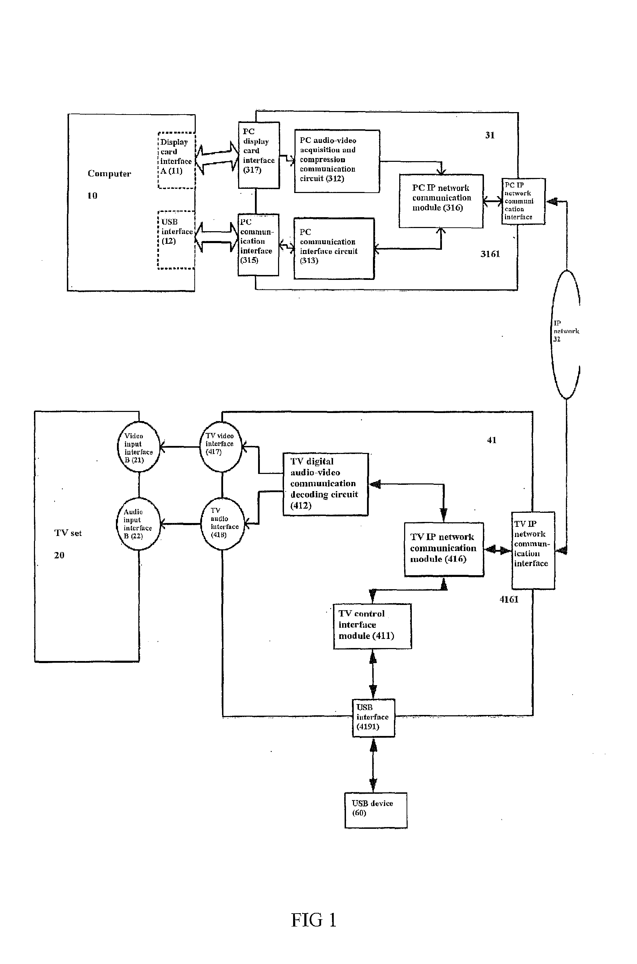

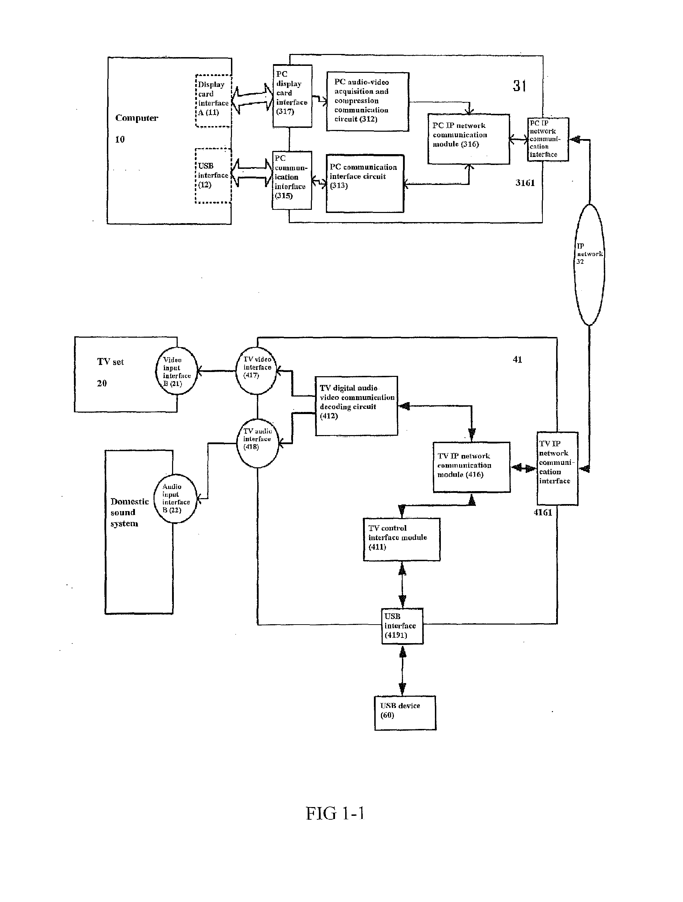

As shown in Figures 1, 19, 20, 21, and 21-2, the system of the present invention includes a computer 10, a PC box 30 on the computer side, an IP network 32, a TV box 40 on the TV side, a TV set 20 and an external USB device 60, the PC box 30 being provided inside with a computer PC box 31, the TV box 40 being provided inside with a television TV box 41.

The system of the present invention further includes an external USB device 60 connected with a TV USB interface 4191, the external USB device 60 including an external USB sound card, a USB-PS2 interface converter, a USB infrared receiver, a USB wireless receiver, a USB game joystick, a USB camera, a USB memory device, and a USB audio-video acquisition and compression device.

The TV set 20 in the system includes a common TV set, a projector and a video display.

The computer PC box 31 is provided with a PC audio-video acquisition and compression communication circuit 312, a PC USB interface circuit 313, a PC IP network communication module 316, a PC display card interface 317, and a PC USB interface 315; the PC audio-video acquisition and compression communication circuit 312 is connected at one end with a display card interface A11 of the computer 10 via the PC display card interface 317, and at the other end with a PC IP network communication interface 3161 via the PC IP network communication module 316; and the PC communication interface circuit 313 is connected at one end with a USB interface 12 of the computer 10 via the PC USB interface 315, and at the other end with the PC IP network communication module 316.

The TV set 20 is provided with a video input interface B21 and an audio interface B22, the audio interface B22 being divided into a left-track audio interface and a right-track audio interface.

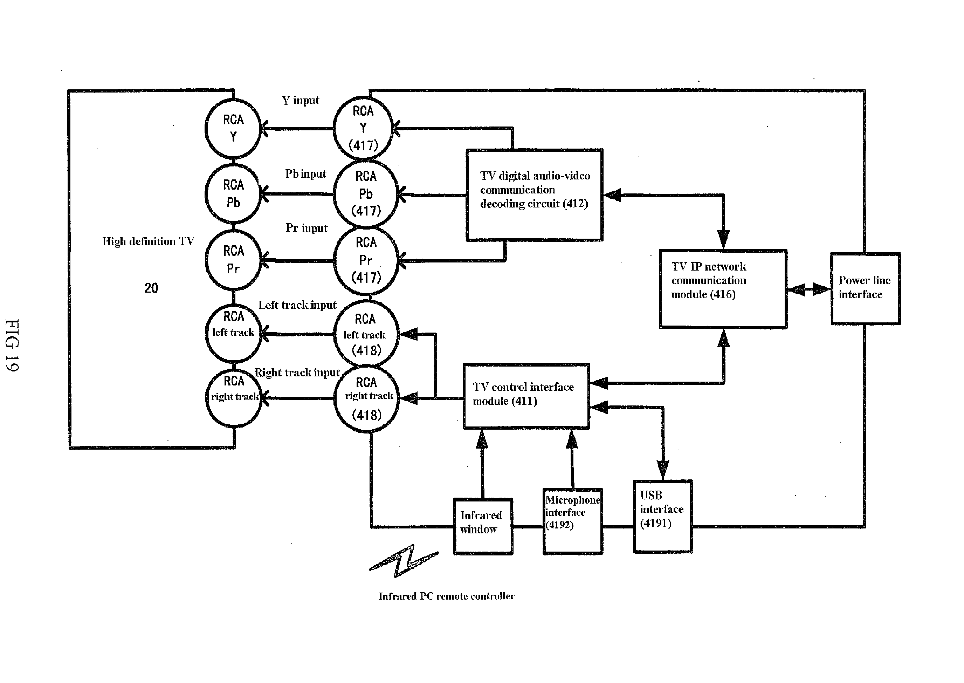

As shown in Figure 1, the television TV box 41 is provided with a TV digital audio-video communication decoding circuit 412, a TV USB interface module 411, a TV IP network communication module 416, a USB interface 4191, a video interface 417, a USB sound card 415, a TV microphone interface 4192, and a TV audio output interface 418; the TV digital audio-video communication decoding circuit 412 is connected at one end with the video input interface B21 and the audio input interface B22 of the TV set via the TV video output interface 417 and the TV audio output interface 418, and at the other end with a TV IP network communication interface 4161 via the TV IP network communication module 416; the TV USB interface module circuit 411 is connected at one end with the USB interface 4191 in the system, and at the other end with the TV IP network communication module 416 before being connected with the TV IP network communication interface 4161; the TV IP network communication interface 4161 is connected via the IP network 32 with the PC IP network communication interface 3161; and the external USB device 60 is connected with the TV USB interface module 411 via the TV USB interface 4191. The microphone as shown in Figure 19 is connected with the TV USB interface module 411 via the TV microphone interface 4192.

The audio interface of the TV box in Figure 1-1 is connected with a domestic sound system.

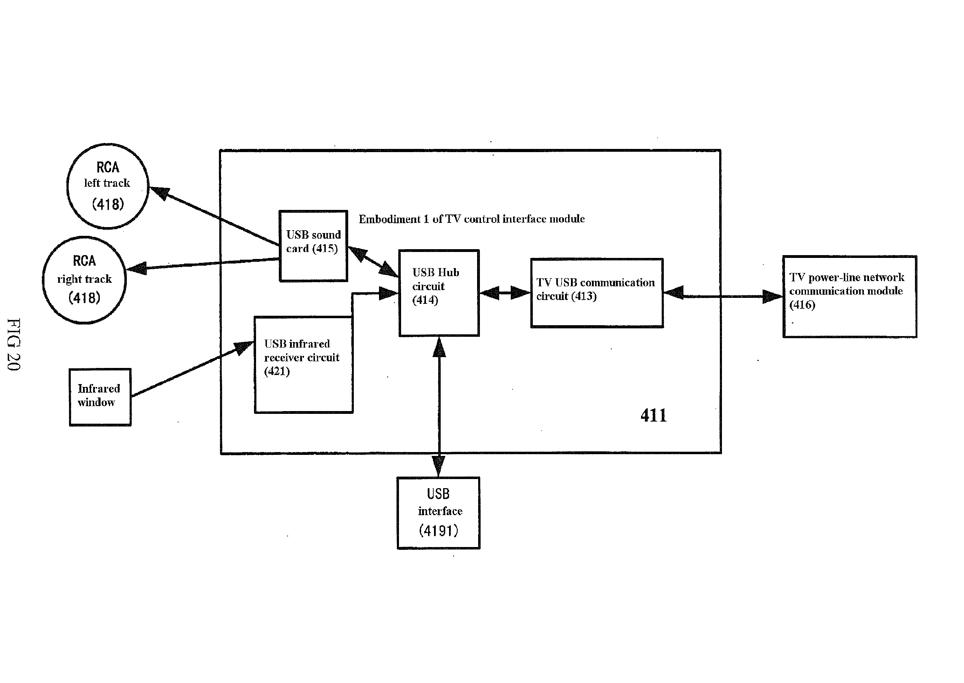

In an embodiment as shown in Figure 20, the TV USB interface module 411 in the television TV box 41 can include a TV USB communication circuit 413, a USB Hub circuit 414, a USB sound card 415, and a USB infrared receiver 421. The USB sound card 415 and the USB infrared receiver 421 are connected with the TV USB communication circuit 413 via the USB Hub circuit 414. The USB sound card 415 outputs audio signals of the left and right tracks to the TV set 20; and the TV USB communication circuit 413 is connected with the TV IP network communication module 416. Here, what is shown in Figure 20 is a power line interface.

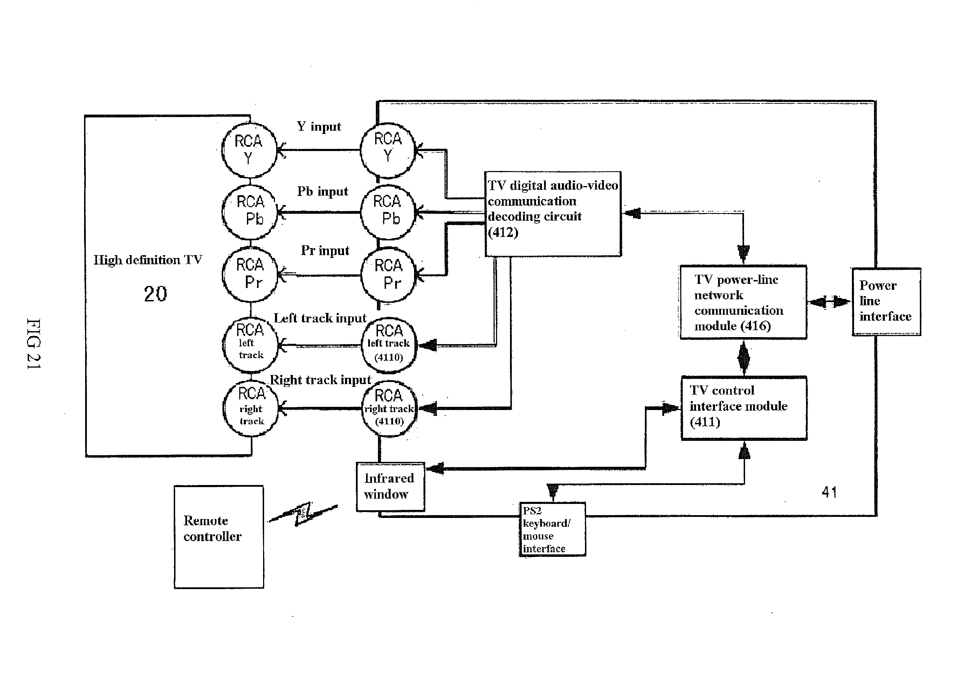

In another embodiment as shown in Figures 21-2, the TV USB interface module 411 in the television TV box 41 can include a TV serial communication circuit 423, the infrared reception circuit 421, and a PS2 interface circuit 422. The PS2 interface circuit 422 can be connected with an external PS2 mouse/keyboard; and the infrared reception circuit 421 and the PS2 interface circuit 422 are connected with the TV IP network communication module 416 via the TV serial communication circuit 423.

As shown in Figure 1, on one hand, the PC IP network communication module 316 receives a first USB signal that the computer 10 sends to the USB device, and outputs the signal via the PC IP network interface after being driven; and on the other hand, it receives a second USB signal from the IP network 32 and sends it to the computer 10 via the PC IP network interface 3161.

On one hand, the TV IP network communication module 416 receives the second USB signal sent by the USB device and forwarded by the USB Hub circuit 414, and outputs the signal via the TV IP network interface after being driven; and on the other hand, it receives the first USB signal from the IP network and forwards it to the USB Hub circuit 414 via the TV IP network communication interface.

As shown in Figure 21, when the TV set is a high definition TV set, the signal outputted by the TV digital audio-video communication decoding circuit 412 of the television TV box 41 includes the video signal of Y, Pb and Pr, and the audio signal of the left and the right tracks.

The display card interface A11, the video input interface B21 and the TV video output interface 417 or the PC display card interface 317 are selected from the group consisting of VGA, S-Video, Composite Video and DVI interface. The TV audio output interface 418 can be either a binaural audio interface or a 5.1 track fiber interface.

The audio signal outputted by the audio output interface A13 of the computer 10 is finally transmitted to the TV set 20 or the domestic sound system via the computer PC box 31 and the television TV box 41.

The physical link of the IP network 32 can be selected from the group consisting of an Ethernet cable, the RF wirelessness or a power line.

In the system as shown in Figure 1, the external USB device 60 can be selected from the group consisting of a USB-PS2 interface converter, a USB infrared receiver, a USB radio-frequency receiver, and a USB audio-video acquisition and compression device, or the combination thereof.

The USB audio-video acquisition and compression device, after performing digitalized acquisition and compression on a TV audio-video signal sent from a TV audio-video signal source, transmits the signal to the computer 10 via the communication interface 12, the signal source including a cable digital TV set-top box and an analog TV tuner; the USB infrared window as shown in Figure 19 is used for receiving an infrared signal emitted by a remote controller; a USB radio-frequency receiver can also be provided for receiving a radio-frequency signal (not shown in the drawing); the USB interface includes a USB1.0 interface, a USB1.1 interface, and a USB2.0 interface of the specification.

In the USB device, the USB-PS2 interface converter, the USB infrared receiver, the USB radio-frequency receiver, and the USB audio-video acquisition and compression device can be used either as a built-in device of the TV interface module 41, or as an external device to be connected with this system.

Operating principle of the present invention as shown in Figure 1 is described in detail below.

As shown in Figure 1, the video signal outputted by the display card interface A11 of the computer 10 and the audio signal outputted by the sound card, after being compressed and coded in the PC audio-video acquisition and compression communication circuit 312 of the computer PC box 31, become data suitable for network transmission, and are sent to the PC IP network communication module 316. The PC USB interface module circuit 313 in the computer PC box 31 is responsible for receiving the first USB signal from the computer communication interface 12, and the signal, after being coded into a first control signal, is sent to the PC IP network communication module 316; the second USB signal is resolved from the second control signal sent by the PC IP network communication module 316 and forwarded to the computer 10. The PC IP network communication module 316 is responsible for network coding, packaging, and framing the received audio-video signal and first control signal, and then sending them to the IP network 32; and it is also responsible for receiving and separating the second control signal from the IP network 32.

As shown in Figure 1, the TV IP network communication module 416 receives the information from the IP network 32, and separates the audio-video signal from the first control signal. The audio-video signal is sent to the TV digital audio-video communication decoding circuit 412, which extracts and recovers the signal into a standard video and audio signal and then sends it to the TV set 20. Then we can see that the video signal outputted by the computer 10 is finally displayed on the screen of the TV set 20. The control signal is sent to the TV USB interface module 411. The TV USB interface module circuit 411 in the television TV box 41 is responsible for recovering from the received first control signal the first USB control signal sent by the computer communication interface 12, and sending the signal to the USB device 60 via the USB interface 4191; and it is also responsible for receiving the second USB signal from the USB device 60, and the signal, after being coded into a second control signal, is sent to the TV IP network communication module 416, and then to the computer PC box 31 via the IP network 32.

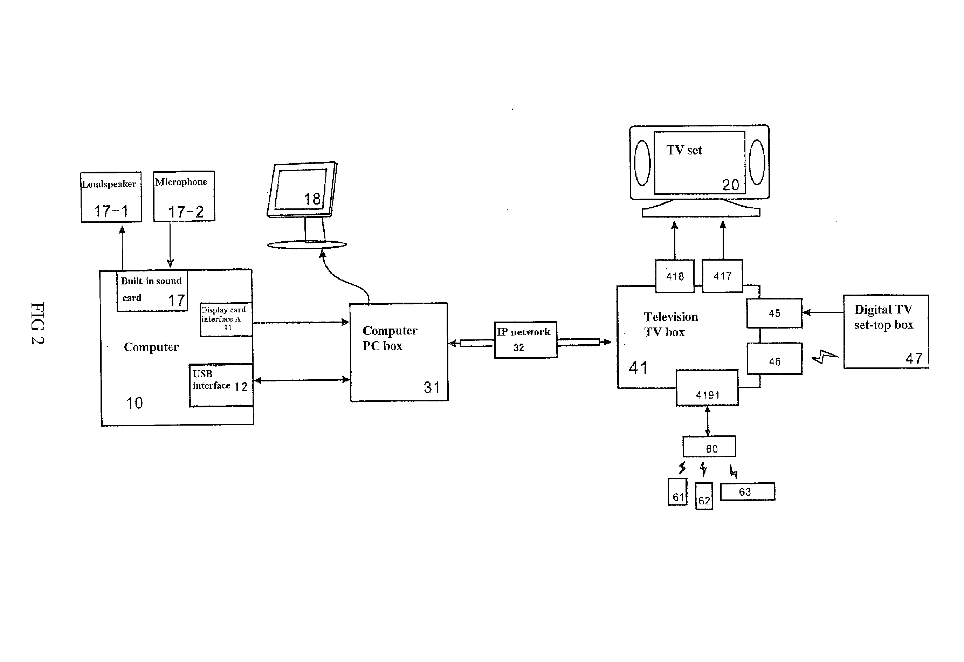

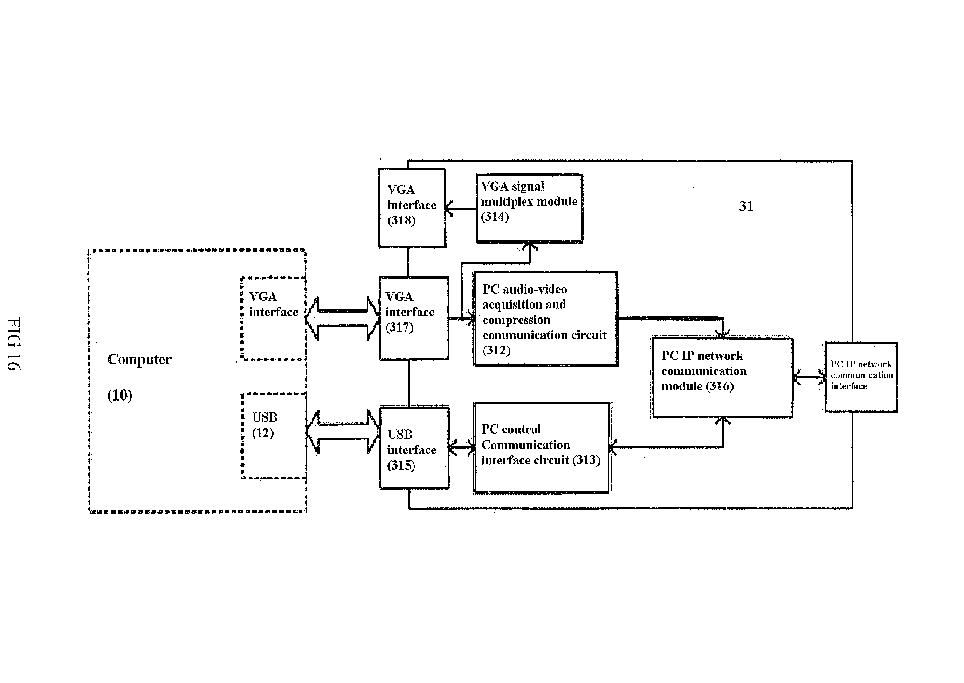

With reference to Figures 16 and 2, the computer PC box 31 can also be provided inside with a VGA signal multiplex module 314, which is used for forwarding a VGA signal from the computer 10 to the VGA output interface 318. When the computer works in the single-workstation mode, this VGA output interface 318 of the computer PC box 31 can be used to connect a display 18 of the computer.

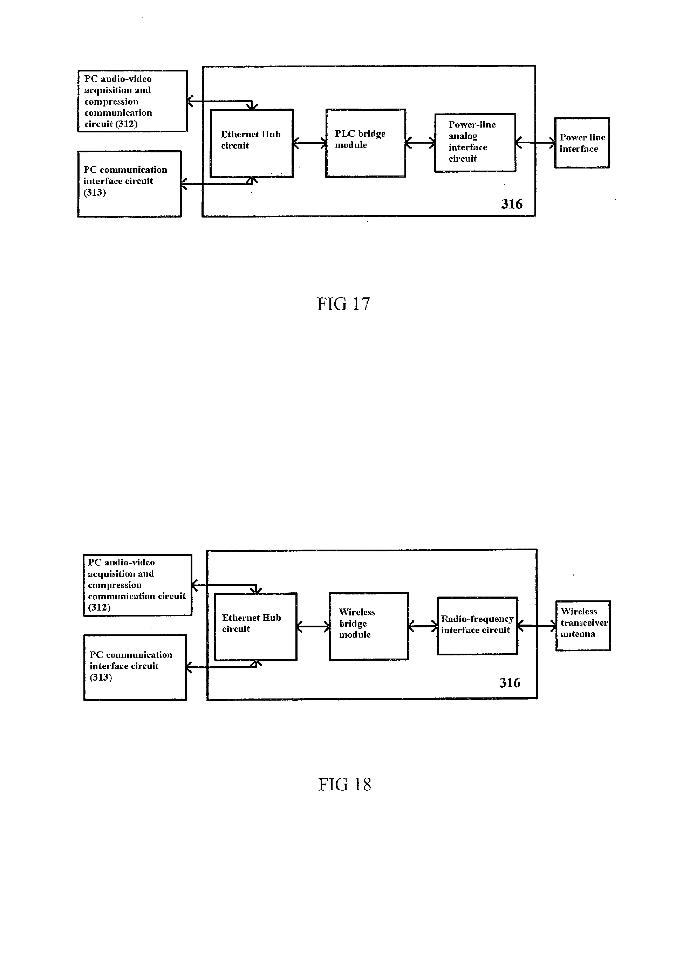

With reference to Figures 17 and 18, the PC IP network communication module 316 is composed of an Ethernet HUB circuit, a PLC bridge module, and a power-line analog interface circuit, or a radio-frequency interface circuit. The Ethernet HUB module forwards according to different address the audio-video data of the PC audio-video acquisition and compression communication circuit 312 and the control information of the PC USB interface circuit 313. The PLC bridge module and the communication interface, according to different networking method of the IP network, can be in the form of RF wireless communication and power line communication or in other forms.

As shown in Figure 20, the TV USB interface module 411 is provided inside with a TV USB communication circuit 413, a USB hub circuit 414, a USB sound card 415, and a USB infrared receiver circuit 421. The USB sound card 415 is integrated with the TV audio output interface 418 and the TV microphone interface 4192.

The USB sound card 415, the USB infrared receiver circuit 421 and the USB interface 4191 are connected with the USB hub circuit 414, and with the USB Host of the computer via the TV USB communication circuit 413, the TV IP network communication module 416, the IP network 32, the PC IP network communication interface, the PC IP network communication module 316, the PC communication control interface circuit 313, and the PC communication interface. The television TV box can, in this form, provide the USB function of a computer.

The TV USB interface module 411 can be integrated with one of the infrared receiver circuit 421, the radio-frequency reception circuit, and the PS2 keyboard/mouse interface, or the combination thereof.

The sound signal outputted by the computer 10 can finally be outputted to the TV set 20 via the USB interface 12 of the computer, the computer PC box 31, the IP network 32, the TV USB interface module 411 in the television TV box 41, the USB Hub circuit 414, and the USB sound card 415, or finally to the TV set 20 via the PC audio-video acquisition and compression communication circuit 312, the PC IP network communication module 316, the IP network 32, the TV IP network communication module 416, and the TV digital audio-video communication decoding circuit 412.

In the single-workstation mode of the present invention as shown in Figure 2, a computer user and a TV user, via their own keyboard, mouse or other devices, control together the same group of application softwares running under the operating system of the computer, a built-in sound card 17 of the computer 10 being connected with a loudspeaker 17-1 and a microphone 17-2, the display 18 being connected with the computer PC box 31. A TV user performs the related operation, with the wireless keyboard 63, the wireless mouse 62 or the remote control device 61 being connected to the TV USB interface 4191 via the wireless reception device; a digital TV set-top box 47 is connected with the television TV box 41 via a USB audio-video acquisition and compression device 45 or an infrared emitter 46; and the television TV box 41 is connected with the TV set 20 via the TV audio output interface 418 and the TV video output interface 417.

The television TV box 41 is additionally connected with the TV audio-video signal input from the digital TV set-top box. In this way, a computer user can watch and record the cable digital TV programs via a computer, and a TV user can either enjoy such functions as TV program time shift and TV program interaction, or watch the TV programs recorded on the harddisk of the computer 10.

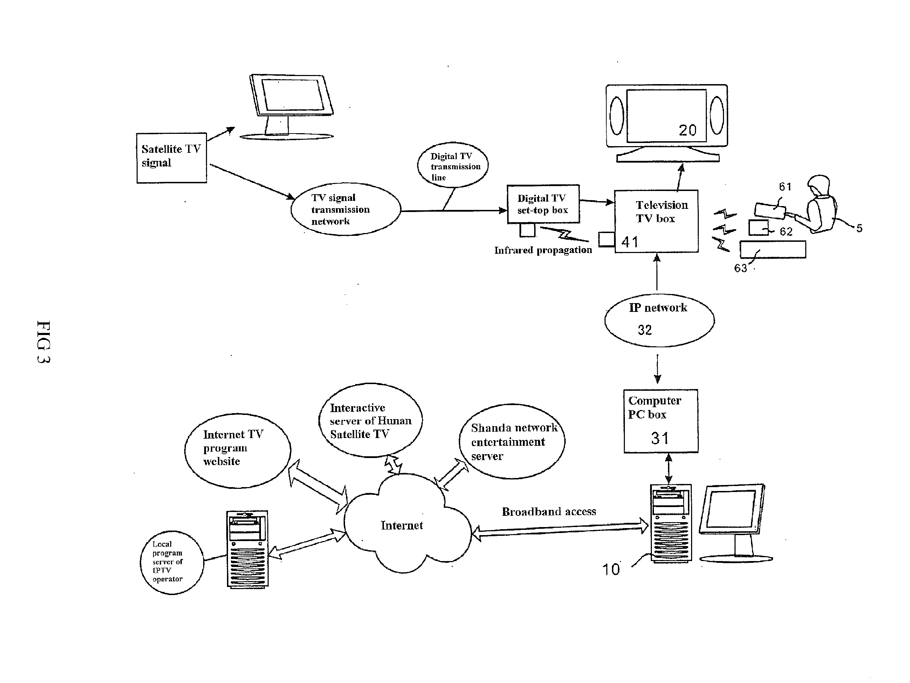

As shown in Figure 3, the computer 10 and the TV set 20 are connected with the television TV box 41 via the computer PC box 31 and the IP network 32; the remote control device 61, the wireless mouse 62 and the wireless keyboard 63 remotely control the computer 10 via the television TV box 41; and the computer 10 accesses the Internet via a broadband interface.

First all the multimedia contents from the Internet are processed by the computer 10, and then the processed results are sent to the TV set 20 in the video and audio form. A TV user 5 interactively controls the multimedia contents via the USB device connected to the television TV box 41. The TV audio-video signal input of the digital TV set-top box on the television TV box 41 enables a computer user to watch and record the cable digital TV programs via the computer 10; and the TV user 5 can either enjoy such functions as TV program time shift and TV program interaction, or watch the TV programs recorded on the harddisk of the computer 10.

For example, the TV audience of the TV program of "Dae Jang Geum" currently played by the Hunan Satellite TV, if being absent for 23 minutes, can watch the video played 23 minutes ago via the function of time shift.

The realization mode and the operation method of time shift of the TV programs are as below:
(1) The program of "Dae Jang Geum" is transmitted to the digital TV set-top box in a user's house via the cable digital TV network, then connected into the television TV box 41, and then sent to the computer 10 via the communication line 32 and the computer PC box 31;
(2) the TV user 5, before leaving the TV set provisionally, pushes a "TV Pause" key on the remote controller 61 of the computer;
(3) the USB infrared receiver connected with the television TV box 41 forwards the received "TV Pause" signal to the computer 10;
(4) the computer 10, after receiving the pause instruction, caches the TV program;
   and the TV image is provisionally paused;
(5) when the TV user 5 returns after 23 minutes, he/she can push a "TV Play" key on the remote controller 61 of the computer; and
(6) the computer 10, after receiving the TV play instruction, starts to play the cached TV program that is played 23 minutes ago, and at the same time continues to cache the TV program currently played by the cable digital TV station.

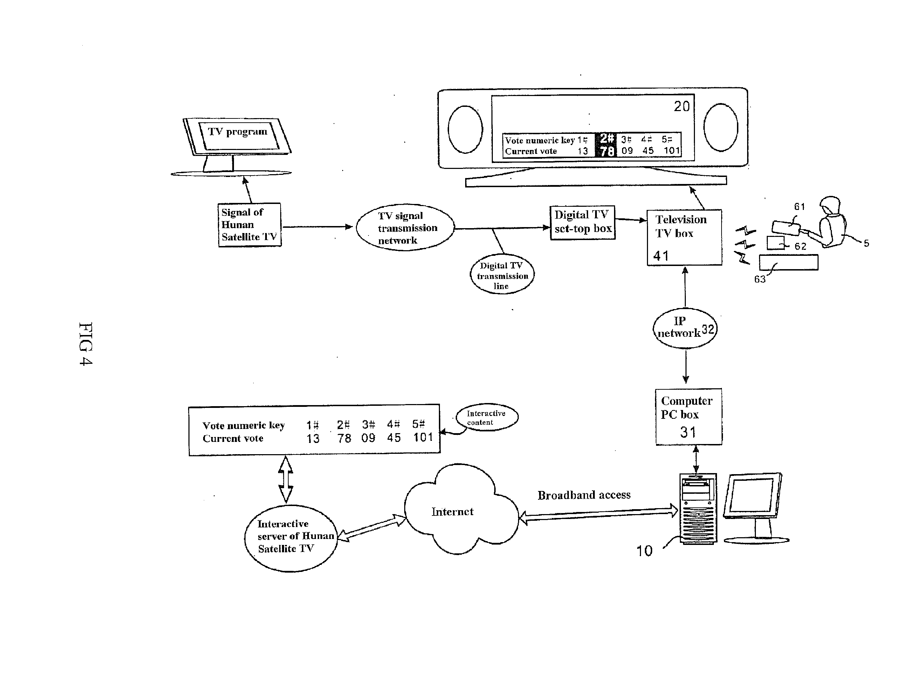

Figure 4 shows an example of the TV program interaction. For example, the Hunan Satellite TV is playing field pickup of the "Super Girl" selection via the cable digital TV system, and provides at the same time an "interactive server" on the Internet. The computer 10 has downloaded and installed in advance an interactive software of "Hunan Satellite TV".

When the TV user 5 watches field pickup of the "Super Girl" selection, if he/she pushes a "TV Interaction Key" on the wireless remote controller 61, an "interactive window" of the "Super Girl" selection will then appear on the TV screen, with the field pickup and the interactive vote of the "Super Girl" selection being on the TV screen at the same time.

The TV audience can vote via the remote controller, and watch the vote process and the real-time vote outcome via the interactive window. In this example, the vote process that we conceive needs cooperation of the interactive software as below:
1. If the audience want to vote for "2#", they need to push the numeric key "2" according to a prompt on the interactive window of the "Super Girl";
2. after the audience push the numeric key "2", color of the interactive window will change from red to green;
3. after the audience push the confirmation key, prompt information will be displayed on the "interactive window" for a few seconds, indicating that the audience have completed voting; and
4. the "interactive window" continues to display the latest vote for each of the players.

Meanwhile, the USB camera on the TV set 20 is finally connected to the computer 10 via the television TV box 41. The "Hunan Satellite TV" can have a video interview at any time with the TV audience participating in the program via the Internet through an interactive server, and display a video of the audience on TV, so as to let the TV audience all over the country further participate in field pickup of the TV program.

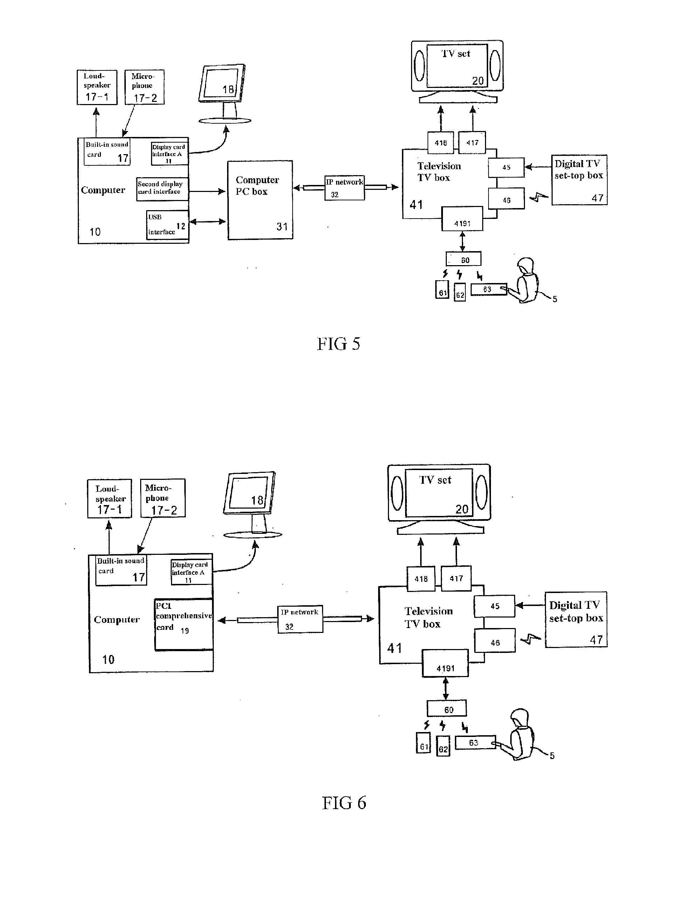

In the double-workstation mode as shown in Figure 5, a computer user and a TV user, via their own keyboard, mouse or other devices, independently control a group of application softwares running under the operating system of the computer, respectively, each having the independent displayed content and sound output. Each of them enjoys a group of independent display and sound, the independent display enjoyed by them both being from one of the display card interface A11 and the second display card interface, respectively, the independence sound enjoyed by them both being from one of the audio output interface A13 and the USB sound card 415 or an exterior USB sound card, respectively.

The built-in sound card 17 of the computer 10 is connected with the loudspeaker 17-1 and the microphone 17-2, and the display 18 with the display card interface A11 in the computer 10, which is provided inside with another display card. This display card has a second display card interface that is connected with the computer PC box 31. Being identical with the single-workstation mode, on the TV side the TV user performs the related operation, with the wireless keyboard 63, the wireless mouse 62 or the remote control device 61 being connected to the TV USB interface 4191 via the wireless reception device; the digital TV set-top box 47 is connected with the television TV box 41 via the USB audio-video acquisition and compression device 45; and the television TV box 41 is connected with the TV set 20 via the audio output interface 418 and the video output interface 417.

Since the computer 10 is provided with the display card and the second display card, the second display card has a second display card interface. A computer user and a TV user can operate the computer 10 independently at the same time, each having independent display and sound input/output without interference with each other. In order to work in the double-workstation mode, the computer 10 further needs to be installed with the Windows multi-workstation shared software. Different from Figure 2, the display 18 has no video output interface connected into the computer PC box 31.

Figure 6 shows an improved double-workstation mode, where the PCI display card and the USB interface circuit of the computer 10 and the computer PC box are integrated into a PCI comprehensive card 19. As shown in the drawing, the computer 10 is provided with the display card interface A11 and the PCI comprehensive card 19; the display 18 is connected to the display card interface A11; a computer user operates the computer 10 via the display 18 as well as the keyboard and the mouse on the computer side; the video from the computer 10 to the TV set 20 is outputted via the PCI comprehensive card 19; a TV user operates the computer 10 via the wireless PC keyboard or the remote controller connected to the television TV box 41; and a computer user and a TV user do not interfere with each other.

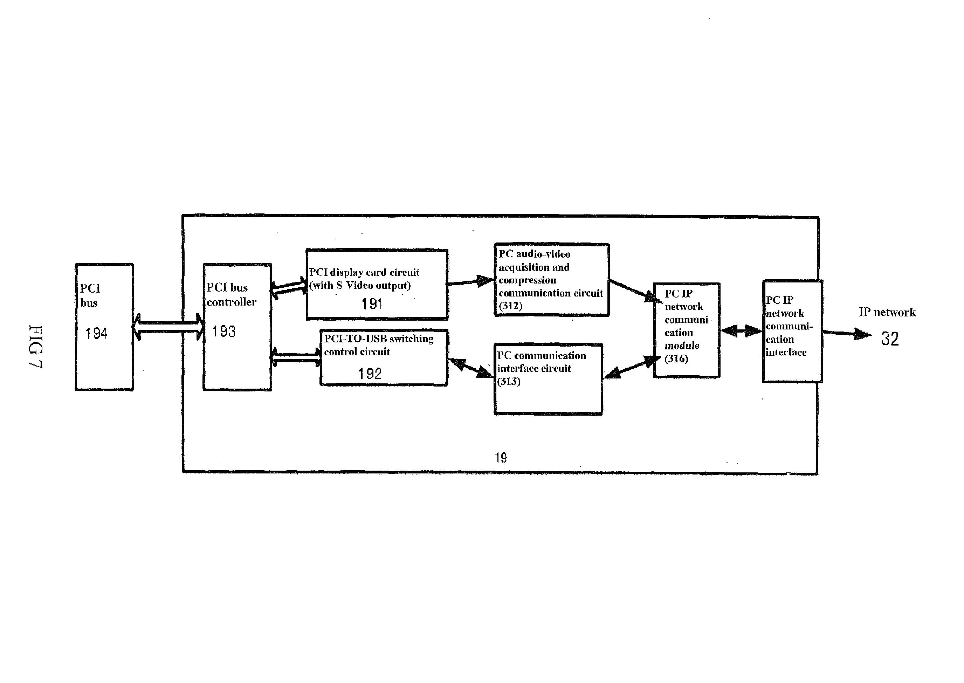

As shown in Figure 7, in the PCI comprehensive card 19, the PCI display card circuit 191 is provided directly with an S-Video output; and the video signal is outputted from the PC audio-video acquisition and compression communication circuit 312 and then, after being compressed and coded, sent out via the PC IP network communication module 316. The PC IP network communication module 316 is further connected with the PC communication control interface circuit 313, which is connected with a PCI-TO-USB switching control circuit 192; and then a PCI bus 194 is accessed via a PCI bus controller 193. In the PCI comprehensive card 19, the computer PC box integrated together neither needs the video format conversion, nor an external power supply. This embodiment is advantageous in lowering the total cost, simplifying the installation, and facilitating operation of a user. As shown in Figure 17, the computer PC box 31 is integrated inside with a PC audio input interface 319, which is connected with the PC audio-video acquisition and compression communication circuit 312.

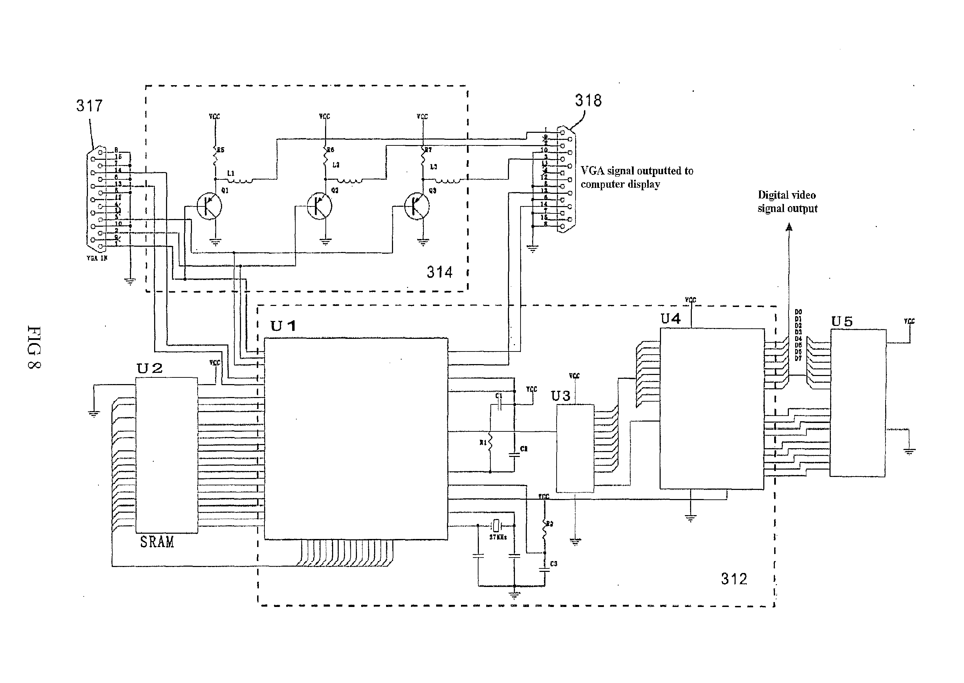

As shown in Figure 8, in the computer PC box 31, the PC video acquisition and compression communication circuit 312 is composed of a video conversion chip U1, a video compression processing chip U4, and an AD sampling chip U3; and the VGA signal multiplex circuit 314 is composed of Q1-Q3, and outputs the VGA signal to the VGA output interface 318, which is connected with the computer display 18.

The VGA signal is converted into a composite video via the video conversion chip U1, then into a digital signal through being sampled by the AD sampling chip U3, and finally into a video stream suitable for the IP network transmission after video compression by the video compression processing chip U4.

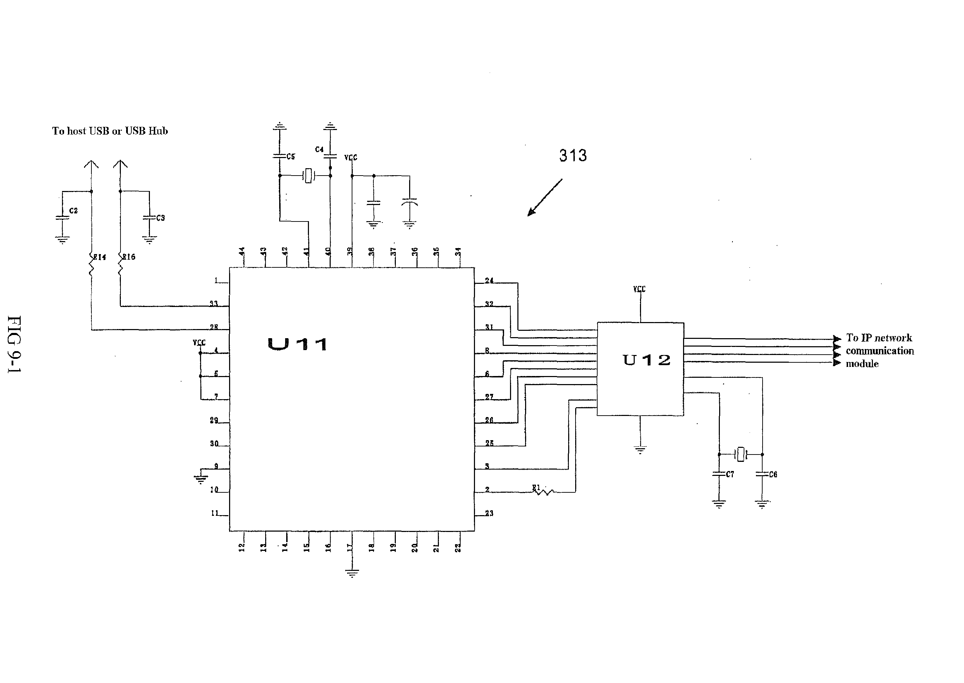

As shown in Figure 9-1, in the computer PC box 31, the portion of PC USB interface is composed of a USB processing master chip U11. Pin 33 and Pin 28 of the USB processing master chip U11 are connected with the USB module interface 12 of the computer 10 via R14 and R16. The processed communication data are converted into an IP network data stream via an Ethernet PHY chip U12 (the USB processing master chip U11 is a chip of Model XCS40XL of FPGA chip of Spartan series of the Xilinx company).

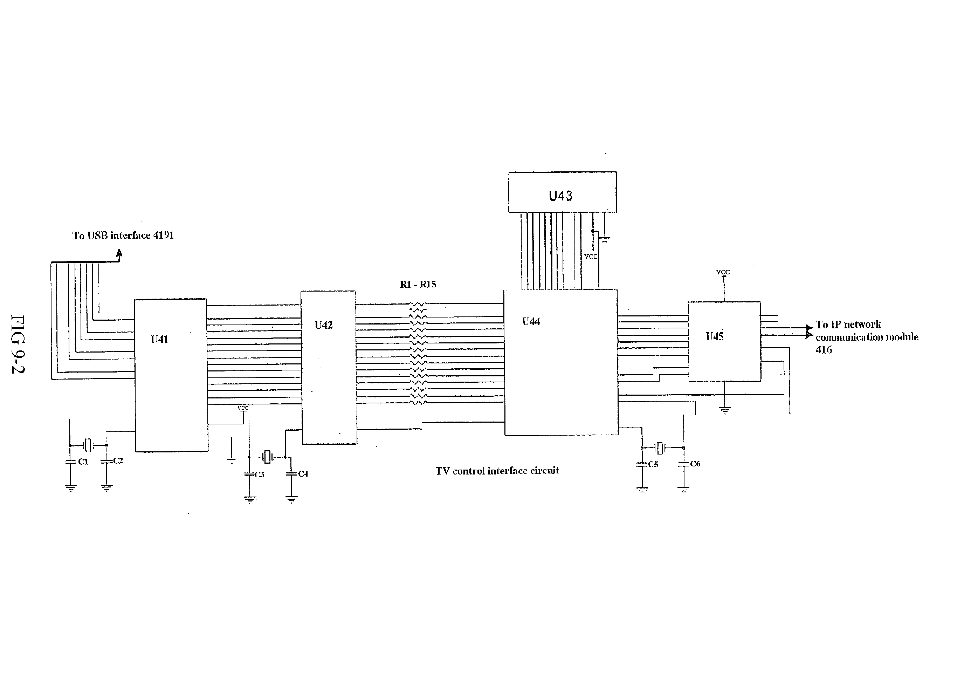

Figure 9-2 shows the electricity schematic diagram of another embodiment of the TV USB interface module 411 in the television TV box of the present invention. U42 (FPGA) and U44 (ARM) complete conversion of the IP network data and the USB data together, with U41 being the USB Hub of the PCI interface. As shown in Figure 17, the TV control interface module using this method may have no PC USB interface module in the computer PC box 31, and a special driver however has to be installed in a computer.

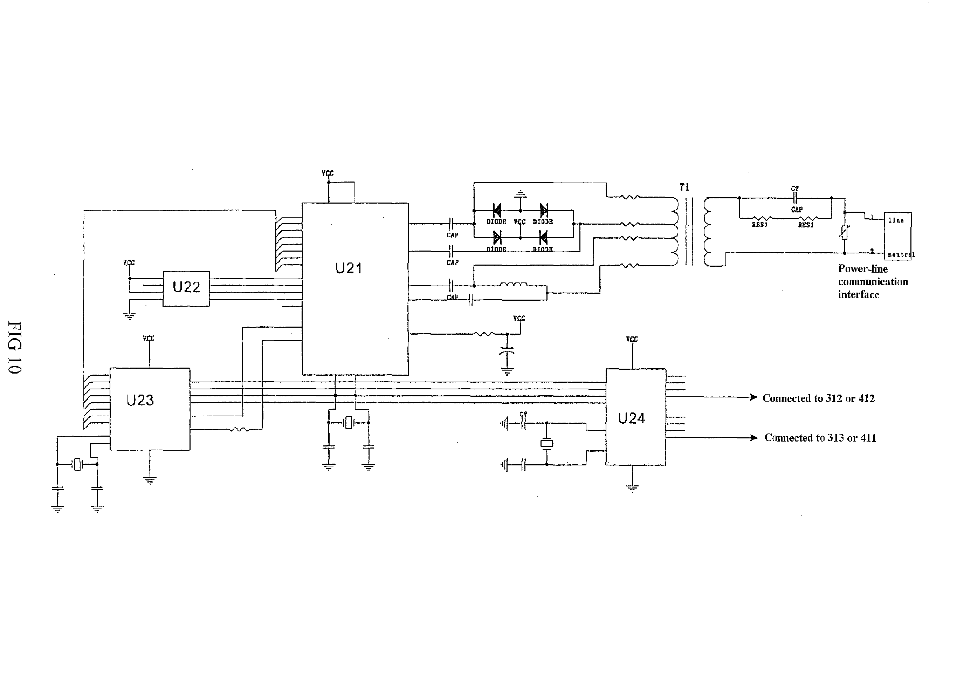

As shown in Figure 10, the IP network communication module is composed of a power-line communication processing master chip U21, a control information memory chip U22, an Ethernet PHY chip U23, and an Ethernet HUB chip U24. During data transmission, the audio-video signal and the control signal are sent into the Ethernet HUB chip U24, respectively, and combined into one stream of IP data after being conversed, coded, and framed. Then the data are sent to the power-line communication processing master chip U21 via the Ethernet PHY chip U23, and connected into the power line network via the power line interface through a transforming coil T1 by the power-line communication processing master chip U21. During data reception, the power-line communication processing master chip U21 extracts the IP data stream from the power line network via the power line interface through the transforming coil T1, sends it to the Ethernet HUB chip U24 via the Ethernet PHY chip U23, and then to an audio-video unit and a control information processing unit according to different addresses after decoding frame by the Ethernet HUB chip U24 (the INT5200 of the INTELION company can be adopted for the power-line communication processing master chip).

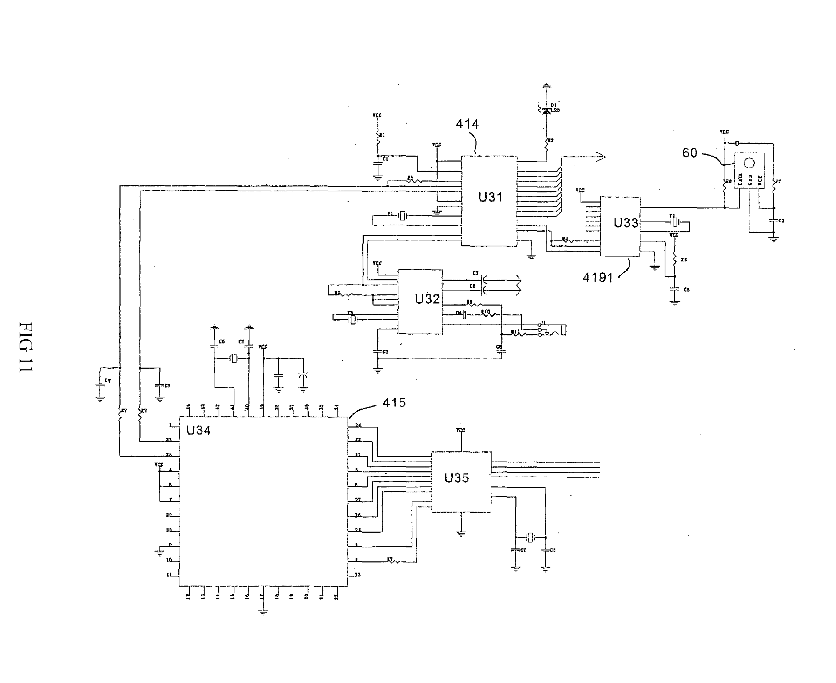

Figure 11 shows the electricity schematic diagram of an embodiment of the TV USB interface module in the television TV box of the present invention. The TV IP network communication module is connected with a USB data processing chip U34 via a PHY chip U35; the USB data processing chip U34 is responsible for coding and decoding processing from the USB data to the IP data, and connected with the USB Hub circuit 414, which is composed of the USB Hub chip U31, which is connected with the TV infrared reception circuit 421; and the USB sound card 415, composed of an audio processing chip U32, capacitors C7, C8, C5, C4 and C3, a crystal oscillator Y3, and resistors R8, R9 and R11, is connected with the binaural audio input terminal and the microphone input of the TV set.

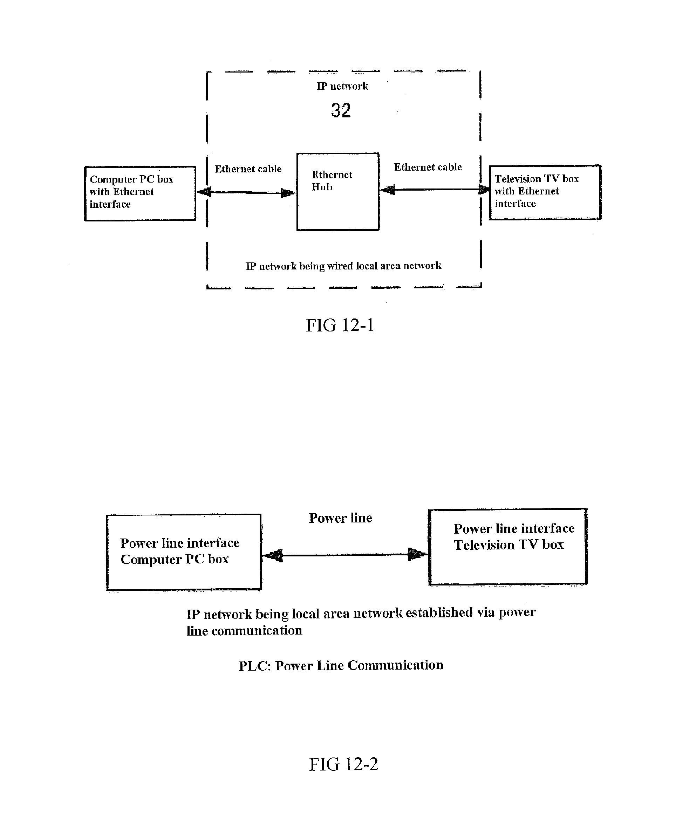

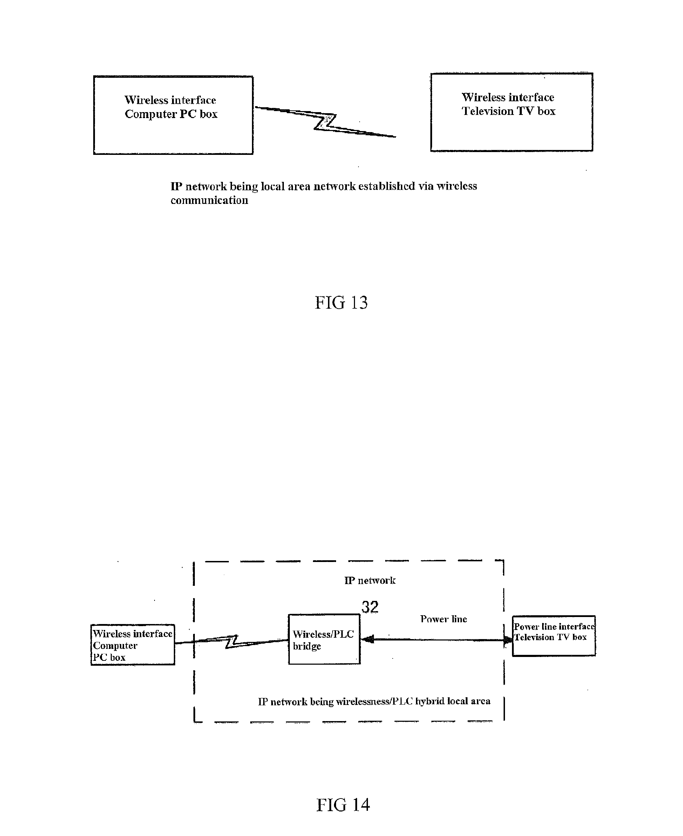

Figures 12-1, 12-2, 13, and 14 show the different ways in which all parts of the system in the execution of the present invention can be combined for different applications, so as to reduce the execution cost or facilitate the application. Figure 12-1 shows a structure where the IP network is a wired local area network; Figure 12-2 shows a structure where the IP network is a local area network established via the power line; Figure 13 shows a structure where the IP network is a local area network established via the wireless communication; and Figure 14 shows a structure where the IP network is a local area network established via the wirelessness/power line.

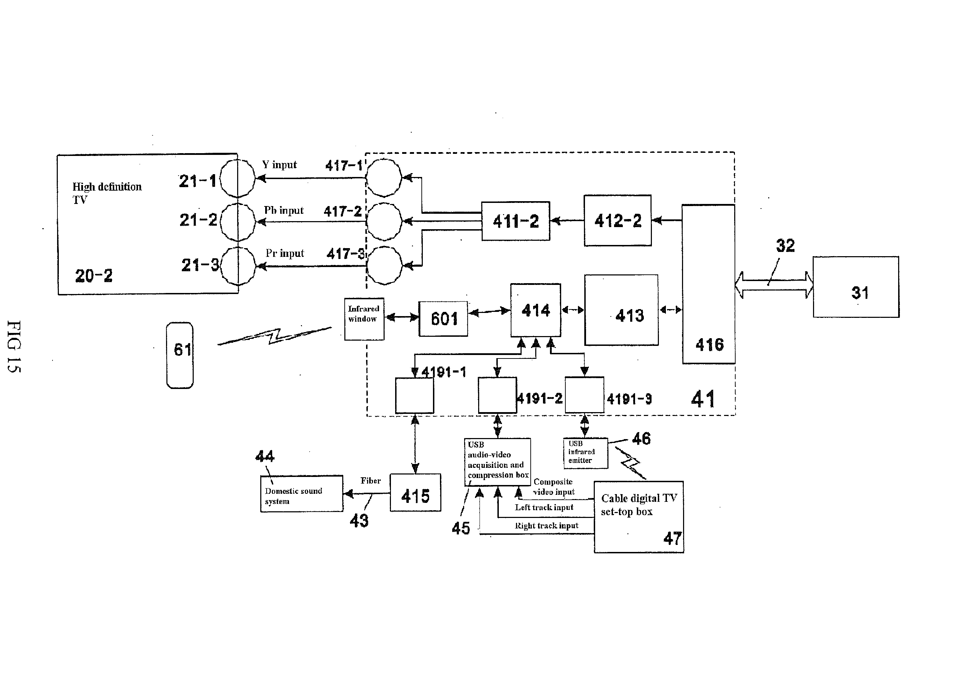

Figure 15 shows an embodiment where the cable digital TV signal is sent to a computer via the television TV box. As shown in the drawing, the cable digital TV audio-video signal from the digital TV set-top box 47 is finally sent to the computer 10 via the television TV box 41 through the USB audio-video acquisition and compression box 45. As shown in Figure 15, the television TV box 41 is connected with the external USB infrared emitter 46; and this emitter must aim at the infrared receiver of the cable digital TV set-top box 47, and thus a computer user can perform remote adjustment while watching the TV programs.

As shown in Figure 15, the television TV box 41 is further connected with the external USB 5.1 track sound card 415, which is connected with a domestic sound system 44 via a fiber 43; and thus the TV user 5 can enjoy the high-quantity audio signal from the computer 10. As shown in the drawing, the USB device 601 of the television TV box 41 is connected with the USB Hub circuit, and provided with a plural of USB interfaces of 4191-1, 4191-2 and 4191-3 connected with a plural of USB devices.

Figure 15 shows another embodiment of the present invention, where the TV USB interface module 411 is integrated with the TV USB interface 4191, which is connected with the USB Hub circuits 414 and the USB device 601.

The USB device 601 is the USB sound card 415, which is connected with the USB Hub circuit 414 at one end and integrated with the TV audio output interface 418 and the TV microphone interface 4192.

The USB device 601 can also be selected from the group consisting of a USB-PS2 interface converter, a USB infrared receiver, a USB radio-frequency receiver, and a USB audio-video acquisition and compression device, or the combination thereof.

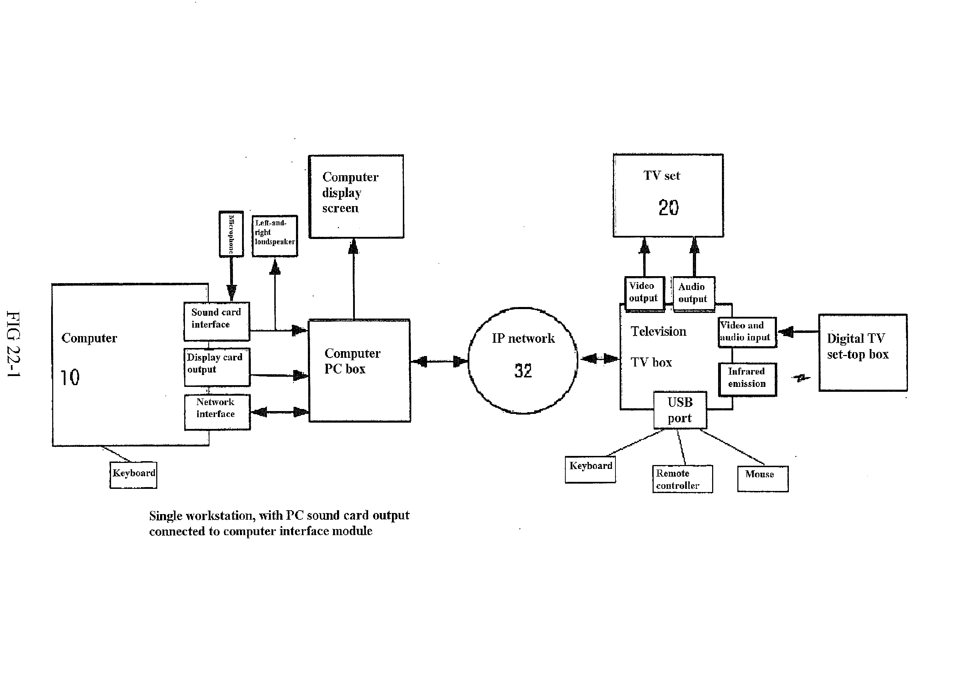

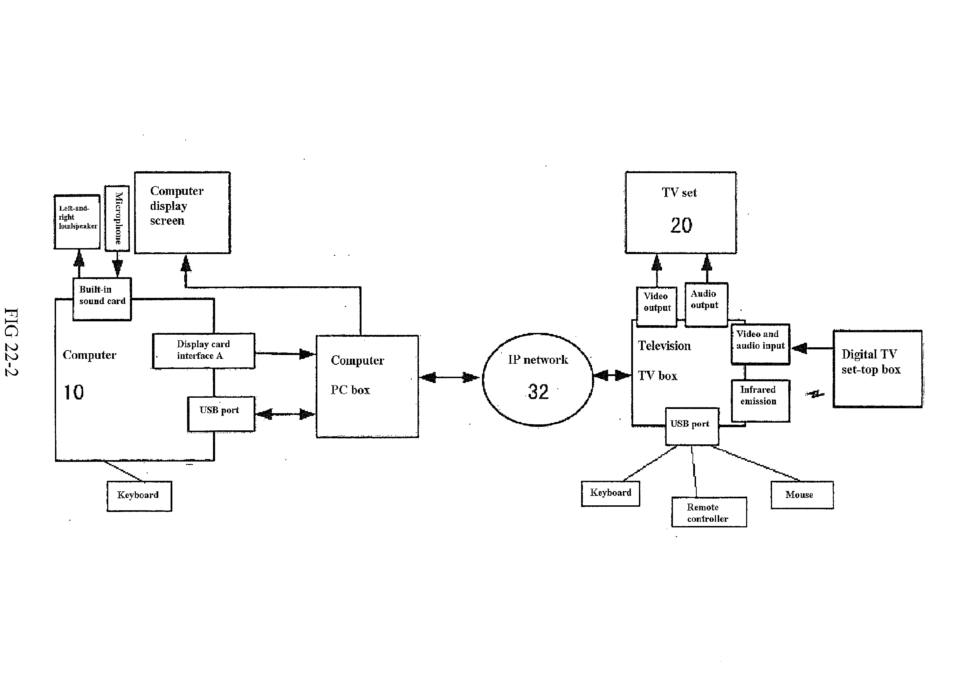

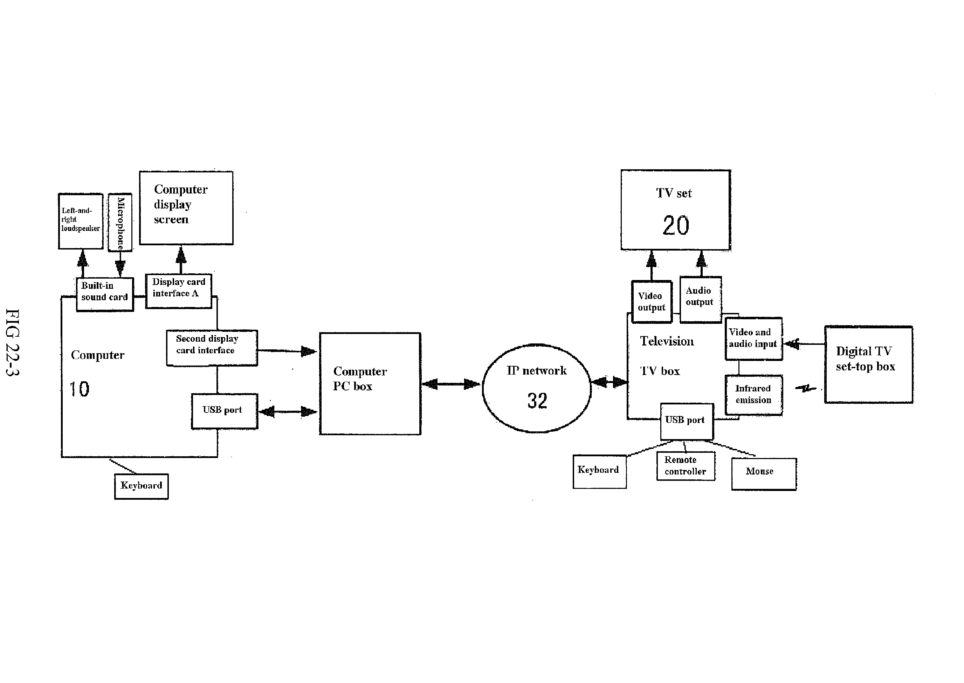

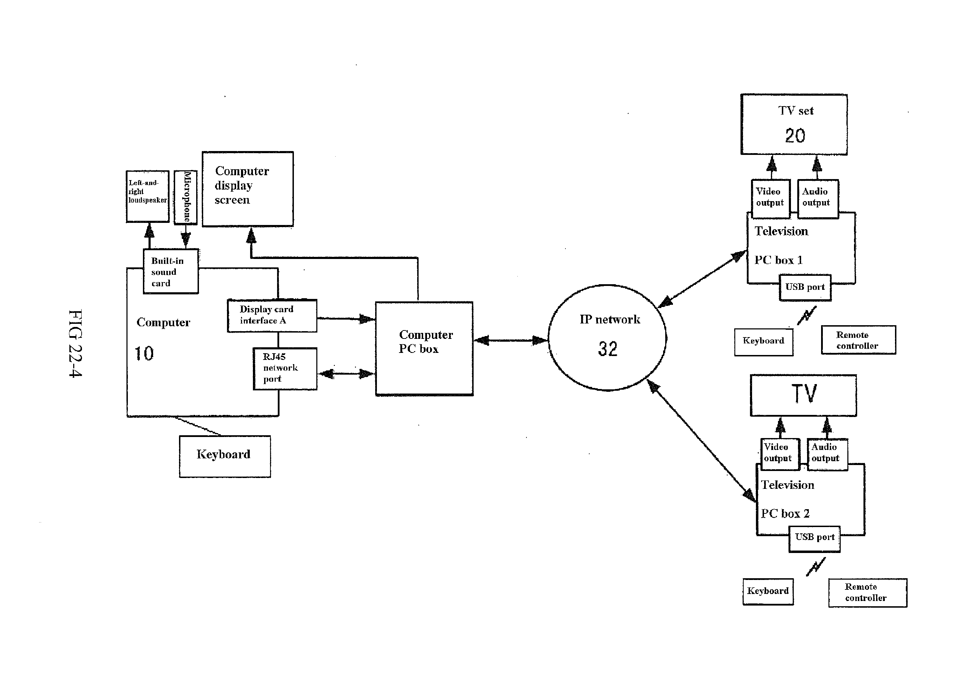

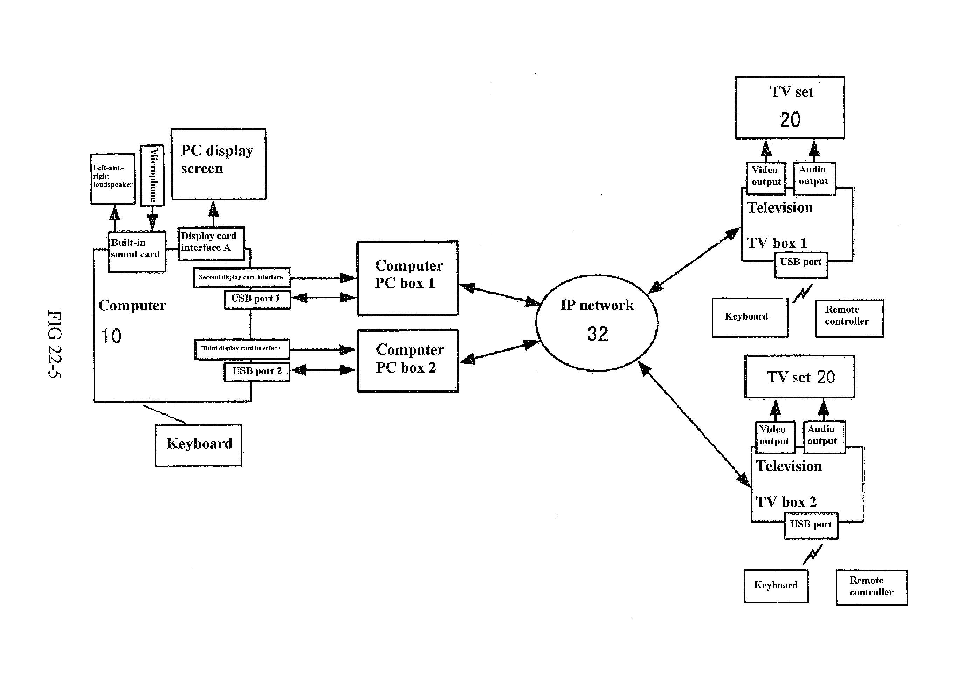

Figure 22-1 shows a single-workstation mode, where the computer sound card output is connected to the computer PC box. Figure 22-2 shows another single-workstation mode, where the computer sound card is positioned inside without connection with the computer PC box. Figure 22-3 shows a double-workstation mode, where a computer has a double display card; and the second display card interface output is connected to the computer PC box, and the display card interface A11 with the display, allowing a computer user and a TV user to operate the device independently. Figure 22-4 shows another single-workstation mode, where a plural of TV boxes can be connected to the TV side, and however only one of the persons on the TV side is allowed to operate the system alone. Figure 22-5 shows a multi-workstation mode, where a plural of TV boxes can be connected and the users on the TV side can operate the system at the same time.

It has been proved by practice that the present invention provides an inexpensive but powerful solution for a domestic user to access the Internet via a TV set, which simplifies operation complication of the Internet access on TV and makes it very convenient and easy for a TV user to enjoy the multimedia contents on the network and a computer. The present invention better resolves a series of problems at the same time, such as the cable TV program recording, the time shift and the effective real-time interaction between the cable TV program channel and the TV audience.

Though the present invention has made detailed explanation and cited the embodiment, those of ordinary skill in the art can obviously present various alternative solutions and make various modifications and adaptations according to the above-mentioned explanation, and therefore all these alternative solutions, modifications and adaptations should fall within the spirit and scope of the invention.

### INDUSTRIAL PRACTICAL APPLICABILITY

Compared with the prior art, the present invention, making full use of the investment a user makes in a home computer, provides an inexpensive but powerful solution for a domestic user to access the Internet via a TV set, which simplifies operation complication of the Internet access on TV and makes it very convenient and easy for a TV user to enjoy the multimedia contents on the network and a computer. The present invention better resolves a series of problems at the same time, such as the cable TV program recording, the time shift and the effective real-time interaction between the cable TV program channel and the TV audience. Besides, the present invention can quickly establish a system by making use of the existing wiring of the local area network inside a house or the local area network established with the power line or the wireless communication, thus greatly reducing the engineering load.

## Claims

1. A computer PC box, comprising a PC box body, **characterized in that** the computer PC box (31) is integrated with a PC display card interface (317), a PC audio-video acquisition and compression communication circuit (312), a PC USB interface circuit (313), a PC USB interface circuit (315), a PC IP network communication module (316), and a PC IP network communication interface (3161); the PC audio-video acquisition and compression communication circuit (312) is connected at one end with the PC display card interface (317), and at the other end with the PC IP network communication module (316); and the PC USB interface circuit (313) is connected at one end with the PC USB interface (315), and at the other end with the PC IP network communication module (316).

2. The computer PC box according to claim 1, **characterized in that** the PC IP network communication interface (3161) includes at least one of an Ethernet interface, an indoor power line interface, and a wireless interface or a fiber interface.

3. The computer PC box according to claim 1, **characterized in that** the computer PC box (31) is integrated inside with a PC audio input interface (319), which is connected with the PC audio-video acquisition and compression communication circuit (312).

4. The computer PC box according to claim 1, **characterized in that** the computer PC box (31) is further integrated inside with a VGA signal multiplex circuit (314) and a VGA output interface (318), which is connected with the PC display card interface (317) via the VGA signal multiplex circuit (314).

5. A television TV box, comprising a TV box body, **characterized in that** the TV box body is provided inside with a TV interface module (41), which is integrated with a TV IP network communication interface (4161), a TV IP network communication module (416), a TV digital audio-video communication decoding circuit (412) and a TV video output interface (417), and a TV USB interface module (411); the TV digital audio-video communication decoding circuit (412) is connected at one end with the TV video output interface (417), and at the other end with the TV IP network communication module (416); and the TV USB interface module (411) is connected with the TV IP network communication module (416).

6. The television TV box according to claim 5, **characterized in that** the TV IP network communication interface (4161) includes at least one of an Ethernet interface, an indoor power line interface, and a wireless interface or a fiber interface.

7. The computer PC box according to claim 5, **characterized in that** the television TV interface module (41) is integrated inside with a TV audio output interface (418), which is connected with the TV digital audio-video communication decoding circuit (412).

8. The television TV box according to claim 5, **characterized in that** the TV USB interface module (411) is integrated with a TV USB communication circuit (413), a USB Hub circuit (414), a USB device (601), and a TV USB interface (4191); the TV USB communication circuit (413) is connected at one end with the USB Hub circuit (414) in the system, and at the other end with the TV IP network communication module (416); and the USB device (601) and the TV USB interface (4191) are both connected with the USB Hub circuit (414).

9. The television TV box according to claim 8, **characterized in that** the USB device (601) can be selected from the group consisting of a USB sound card (415), a USB-PS2 interface converter, a USB infrared receiver, a USB radio-frequency receiver, and a USB audio-video acquisition and compression device, or the combination thereof; and the USB sound card (415) is integrated with the TV audio output interface (418) and a TV microphone interface (4192).

10. The television TV box according to claim 5, **characterized in that** the TV USB interface module (411) is integrated with one of the group consisting of a USB infrared receiver circuit (421), a USB radio-frequency reception circuit, and a USB-PS2 keyboard/mouse interface, or the combination thereof.

11. A system for interactive entertainment with a television and a computer connected by the IP network, comprising a computer (10), a TV set (20) and an IP network (32), **characterized in that** the system further includes a computer PC box (30) and a television TV box (40), a display card interface A(11) of a computer being connected with the PC display card interface (317) of the computer PC box (30), the USB interface (12) of the computer being connected with the PC USB interface (315); the PC IP network communication interface (3161) of the computer PC box (30) communicates via the IP network (32) with the TV IP network communication interface (4161) of the television TV box; the TV video output interface (417) of the television PC box (30) is connected with a video input interface B(21) of the TV set (20); and the TV video output interface (418) of the television TV box (40) is connected with an audio input interface B(22) of the TV set (20) or a domestic sound system.

12. The system for interactive entertainment with a television and a computer connected by the IP network according to claim 11, **characterized in that** an audio output interface A(13) of the computer is connected with the audio input interface (319) of the computer PC box.

13. The system for interactive entertainment with a television and a computer connected by the IP network according to claim 11, **characterized in that** communication medium adopted for the IP network (32) can be selected from the group consisting of a category 5 cable, a power line, wirelessness or a fiber.

14. The system for interactive entertainment with a television and a computer connected by the IP network according to claim 11, **characterized in that** the VGA output interface (318) of the computer PC box (30) is connected with a display (18).

15. The system for interactive entertainment with a television and a computer connected by the IP network according to claim 11, **characterized in that** the computer (10) is provided with a second display card interface, the display card interface A(11) and the second display card interface of the computer being connected with one of the PC display card interface (317) and the display (18), respectively.

16. The system for interactive entertainment with a television and a computer connected by the IP network according to claim 15, **characterized in that** the second display card interface and the computer PC box (31) are integrated into a PCI comprehensive card (19), which is positioned in the computer (10) and connected with the TV interface module (41) via the IP network (32).

17. The system for interactive entertainment with a television and a computer connected by the IP network according to claim 11, **characterized in that** the system further includes an external USB device (60); the external USB device (60), being connected with the TV USB interface (4191), includes an exterior USB sound card, a USB-PS2 interface converter, a USB infrared receiver, a USB wireless receiver, a USB game joystick, a USB camera, a USB memory device, and a USB audio-video acquisition and compression device.

18. The system for interactive entertainment with a television and a computer connected by the IP network according to claim 11, **characterized in that** the TV set (20) includes a common TV set, a projector and other video display devices.

19. A method for interactive entertainment with a television and a computer connected by the IP network, and the system for interactive entertainment with a television and a computer connected by the IP network according to claims 11-18, **characterized in that** a video signal sent to the TV set (20) is from the display card output of the computer (10); the video signal outputted by the display card interface A(11) of the computer (10) is finally transmitted to the video input interface B(21) of the TV set (20) via the computer PC box (31) and the TV interface module (41); and a USB system is established by the USB interface (12) of the computer (10) together with the USB Hub circuit (414), the USB device (601) and the exterior USB device (60) in the TV interface module (41).

20. The method for interactive entertainment with a television and a computer connected by the IP network according to claim 19, **characterized in that** the audio signal outputted by the audio output interface A(13) of the computer (10) is finally transmitted to the TV set (20) or the domestic sound system via the computer PC box (31) and the TV interface module (41).

21. The method for interactive entertainment with a television and a computer connected by the IP network according to claim 19, **characterized in that** the USB audio-video acquisition and compression device, after performing digitalized acquisition and compression on a TV audio-video signal sent from a TV audio-video signal source, finally transmits the signal to the computer via the TV interface module (41) and the computer PC box (31).

22. The method according to any of claims 19-21, **characterized in that** the method has a double-workstation mode, where a user of the computer (10) and a user of the TV set (20), via their own keyboard, mouse or remote device, independently control a group of application softwares running under an operating system of the computer (10), respectively, and each of them enjoys a group of independent display and sound, the independent display enjoyed by them both being from one of the display card interface A(11) and the second display card interface, respectively, the independence sound enjoyed by them both being from one of the audio output interface A(13) and the USB sound card (415) or an exterior USB sound card, respectively.
